# EUROPÄISCHE PATENTANMELDUNG

(11) **EP 3 690 228 A1**
(43) Veröffentlichungstag der Anmeldung: **05.08.2020**
(21) Anmeldenummer: 20155131.4
(22) Anmeldetag: 03.02.2020
(51) Int. Cl.: F03B 11/02

(54) **TRANSPORTABLER KRAFTWERKSAUFBAU**

(30) Priorität: 01.02.2019 DE 202019000477 U; 18.02.2019 DE 102019103981
(71) Anmelder: König, Ernst Wilhelm, 34414 Warburg (DE)
(72) Erfinder: König, Ernst Wilhelm, 34414 Warburg (DE)
(74) Vertreter: Dantz, Jan Henning

(57) **Zusammenfassung**

Ein Kraftwerksaufbau (1), umfasst ein im Wesentlichen quaderförmigen Gehäuse (2) mit einen Innenraum umgebenden Wänden; eine in dem Gehäuse (2) angeordnete Turbine (5), einen in dem Gehäuse (2) angeordneten durch die Turbine (5) angetriebenen Generator (6), mindestens einen an einer Wand festgelegten Zulauf (7) zu der Turbine (5), und mindestens einen an einer Wand festgelegten Ablauf (12) hinter der Turbine (5). Dadurch kann der Kraftwerksaufbau bei einem Turbinenhersteller hergestellt und als fertige Einheit auch an entlegenen Orten aufgestellt werden.

## Beschreibung

Die vorliegende Erfindung betrifft einen transportabler Kraftwerksaufbau zur Stromerzeugung durch Wasserkraft, also ein Flußkraftwerk.

Die EP 2 730 777 A1 offenbart ein Wasserkraftwerk, bei dem eine Pelton-Turbine angetrieben wird, die in einem Gehäuse drehbar gelagert ist. Solche Turbinen treiben Generatoren zur Stromerzeugung an, wobei die Installation der einzelnen Aggregate und Bauteile vergleichsweise aufwändig ist und in einem zusätzlichen Bauwerk erfolgt. Gerade in Gebirgsregionen, die entfernt von einer Zivilisation angeordnet sind, lässt sich ein solches Kraftwerk nur mit hohem Aufwand anliefern und in einem herkömmlichen Gebäude aufbauen. Die Materialbeschaffung bis zur Baustelle ist sehr aufwändig.

Die US 4 078 388 offenbart eine transportable Turbine mit einem Turbinengehäuse mit Hohlkammern, in dem ein Flügelrad und ein Generator angeordnet sind. An dem Turbinengehäuse sind integral ausgebildete Anschlüsse für einen Zulauf und einen Ablauf ausgebildet. Auch diese Turbine wird unmittelbar auf einem Untergrund befestigt.

Es ist daher Aufgabe der vorliegenden Erfindung, einen Kraftwerksaufbau bereitzustellen, der einfach installiert werden kann und auch zur Aufstellung in Gegenden geeignet ist, die schwer zugänglich sind.

Diese Aufgabe wird mit einem Kraftwerksaufbau mit den Merkmalen des Anspruches 1 gelöst.

Erfindungsgemäß umfasst der Kraftwerksaufbau ein im Wesentlichen quaderförmiges transportables Gehäuse, beispielsweise einen ISO-Container, mit einem einen Innenraum umgebenden Wänden, wobei innerhalb des Gehäuses eine Turbine, ein durch die Turbine angetriebener Generator, sowie ein Zulauf zu der Turbine und ein Ablauf hinter der Turbine vorgesehen sind, wobei Zulauf und Ablauf jeweils an einer Wand des Gehäuses festgelegt sind. Der Zulauf ist bevorzugt hangseitig und der Ablauf auf der gegenüberliegenden Talseite angeordnet, so dass das Gehäuse von dem eingeleiteten Wasser durchströmt wird. Dadurch kann das Gehäuse mit diesen Bauteilen und Aggregaten als vorgefertigte Einheit beim Turbinenhersteller montiert und dann fertig ausgeliefert werden. Die Turbine mit dem Turbinengehäuse ist dabei innerhalb des weiteren Gehäuses festgelegt, insbesondere über eine separat von dem Turbinengehäuse ausgebildete Stützkonstruktion. Dies ermöglicht das Aufstellen des Kraftwerksaufbaus auch in entfernt liegenden Regionen, die weit von der Zivilisation entfernt sind. Der Kraftwerksaufbau kann als Einheit über einen Lastkraftwagen zu dem Aufstellungsort gebracht werden und dort an ein Zulaufrohr angeschlossen werden, um zur Energieerzeugung eingesetzt zu werden. Dies verringert die Installationskosten beträchtlich und ermöglicht die Stromversorgung von Menschen mit umweltfreundlichen Mitteln.

Vorzugsweise ist in dem Gehäuse zusätzlich noch ein Schaltschrank mit einer Steuerung installiert. Der die Turbine und/oder den Generator automatisch steuert. Dadurch kann die notwendige Steuerung ebenfalls geschützt in dem Gehäuse untergebracht sein.

Das Gehäuse umfasst vorzugsweise einen Boden, bevorzugt aus einer 10mm bis 30mm dicken Stahlbodenplatte, und eine Stützkonstruktion, wobei die Turbine beabstandet von dem Boden erhöht auf der Stützkonstruktion montiert ist, beispielsweise in einer Höhe zwischen 2 und 3 Metern vom Boden. Die Stützkonstruktion kann beispielsweise einen Gitterrost aufweisen. Die Stützkonstruktion kann ferner einen auf Trägern festgelegten Rahmen umfassen, auf dem die Turbine und der Generator angeordnet sind. Der Rahmen kann aus miteinander verbundenen Profilen hergestellt sein. Die Turbine ist kann dann an einem fest mit dem Gehäuse verbundenen Rahmen verschraubt.

Zum Antrieb des Generators über die Turbine ist vorzugsweise ein Riementrieb vorgesehen, beispielsweise ein Flachriemen oder ein Keilriemen. Optional kann zwischen der Turbine und dem Generator auch ein Übersetzungsgetriebe vorgesehen sein, um die Drehzahl an dem Generator zu erhöhen oder zu reduzieren. Als Generator zur Stromerzeugung wird vorzugsweise ein Generator mit Permanentmagneten eingesetzt, der mit einem Schwungrad gekoppelt sein kann. Diese Anordnung spart das Getriebe.

Die Antriebswelle der Turbine ist vorzugsweise parallel und beabstandet zu der Antriebswelle des Generators angeordnet. Dadurch können die Turbine und der Generator platzsparend in dem Gehäuse auf einer Ebene angeordnet werden.

Für eine verbesserte Handhabung können an mindestens vier Ecken des Gehäuses, optional an mehr als vier Ecken, Ösen zum Einbringen von Lasthaken vorgesehen sein. Dadurch kann das Gehäuse von seiner Transportposition auf einfache Weise in seine aufgestellte Position gebracht werden. In der Transportposition ist das Gehäuse vorzugsweise in Längsrichtung horizontal angeordnet, während er in der aufgestellten Position in Längsrichtung im Wesentlichen vertikal ausgerichtet ist.

Das transportable Gehäuse muss einerseits für die Aufnahme der Bauteile eine ausreichende Größe besitzen und darf andererseits für den Transport auf Straßen nicht gewisse Maße überschreiben, beispielsweise darf die Transporthöhe nicht größer als 4 m sein, so dass die Ladehöhe meist nur maximal rund 3,5 m betragen darf. Das Innenvolumen des Gehäuses ist vorzugsweise größer als 60 m³, beispielsweise zwischen 80 m³ und 120 m³.

Zur einfachen Installation des Gehäuses kann der Zulauf über einen Flansch an einer Wand des Gehäuses festgelegt sein, an den außen an dem Gehäuse ein Zulaufrohr anschließbar ist. Der Ablauf ist ebenfalls an dem Gehäuse festgelegt und weist vorzugsweise einen Durchmesser auf, der mindestens 20% größer ist als der Durchmesser des Zulaufes.

Für eine stabile Ausgestaltung des Gehäuses können die Wände aus Stahlblech, insbesondere einem innen und außen verzinkten Stahlblech, hergestellt sein, beispielsweise mit einer Dicke zwischen 6 mm bis 10 mm, insbesondere 7mm bis 9mm. Das Stahlblech kann zur Versteifung und zur Erhöhung der Stabilität gewellt oder anderweitig profiliert sein.

In einer weiteren Ausgestaltung des Kraftwerksaufbaus ist die Turbine als Wasserturbine, wie Ossberger-Kaplan-Turbine, Pelton-Turbine oder Francis-Turbine ausgebildet. Die Turbine kann je nach Typ mit horizontaler oder vertikaler Drehachse betrieben werden. Bei einer horizontal liegenden Turbine kann der Generator über ein Getriebe, insbesondere ein Winkelgetriebe und/oder einen Riementrieb angetrieben werden. Ein Schwungrad an der Antriebswelle der Turbine kann dabei einen ruhigen Lauf erzeugen.

In der aufgestellten Position des Gehäuses ist oberhalb der Turbine vorzugsweise ein begehbarer Zwischenboden festgelegt, wobei oberhalb des Zwischenbodens beispielsweise der Schaltschrank an dem Gehäuse fixiert sein kann. Optional kann auch oberhalb des Zwischenbodens eine zu öffnende Tür vorgesehen sein, um den Zutritt von außen zu dem Gehäuse zu ermöglichen. Für eine stabile Fixierung des Gehäuses kann dieser zudem bodenseitig mit einem Untergrund, beispielsweise einem mindestens 400mm starken Betonfundament, verschraubt sein.

Die Erfindung wird nachfolgend anhand eines Ausführungsbeispiels mit Bezug auf die beigefügten Zeichnungen näher erläutert. Es zeigen:
- Figur 1: eine perspektivische Ansicht eines erfindungsgemäßen Kraftwerksaufbaus, und
- Figur 2: eine Draufsicht auf die Turbine und den Generator des Kraftwerksaufbaus der Figur 1.

Ein Kraftwerksaufbau 1 umfasst ein transportables Gehäuse 2, der im Wesentlichen quaderförmig ausgebildet ist und Wände aufweist, beispielsweise aus einem Stahlblech, insbesondere einem innen und außen verzinkten Stahlblech. Das Gehäuse 2 umgibt einen Innenraum, in dem eine schematisch dargestellte Turbine 5 und ein Generator 6 zur Stromerzeugung angeordnet sind.

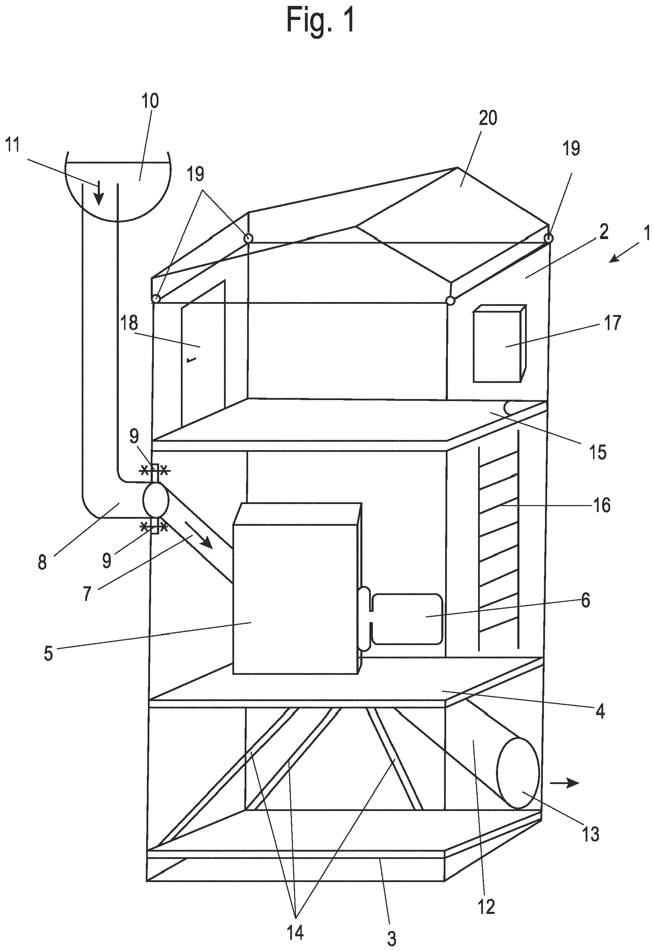

Das Gehäuse besitzt eine Länge und bezogen auf die aufgestellte Position eine Höhe von beispielsweise zwischen 7 m bis 10 m, insbesondere etwa 9 m, und eine Breite und Tiefe zwischen 2,50 m und 4 m, insbesondere zwischen 3m und 3,5m. Dadurch kann das Gehäuse 2 in einer Transportstellung in Längsrichtung horizontal ausgerichtet und auf einem Fahrzeug transportiert werden, kann aber dann am Installationsort aufgestellt werden, so dass sich die Längsrichtung vertikal streckt, wie dies in Figur 1 gezeigt ist. Das Gehäuse 2 kann dabei als ISO-Container ausgebildet sein, wie sie im Transportwesen eingesetzt werden.

In der aufgestellten Position umfasst das Gehäuse 2 einen Boden 3, beispielsweise eine integral mit dem Gehäuse 2 ausgebildete oder zusätzlich in dem Gehäuse 2 angeordnete Stahlplatte, die mit einem Untergrund verbunden ist. Hierfür können Schraubverbindungen zwischen dem Boden 3 und einem darunter angeordneten Betonfundament vorgesehen sein.

Die Turbine 5 ist nicht unmittelbar auf den Boden 3 angeordnet, sondern beabstandet, beispielsweise in einer Höhe zwischen 2 m und 3 m angeordnet und über eine Stützkonstruktion gehalten. Die Stützkonstruktion umfasst einen auf Trägern festgelegten Rahmen, auf dem die Turbine 5 und der Generator 6 angeordnet sind. Der Rahmen ist durch eine Vielzahl von Verstärkungsstreben 14 auf dem Boden 3 abgestützt. Die Stützkonstruktion kann Stahlträger umfassen, die mit den Wänden des Gehäuses 2 verschweißt sind. Um den Rahmen ist ein begehbarer Gitterrost 4 montiert, der sich im Wesentlichen horizontal erstreckt.

An die Turbine 5 ein Zulauf 7 angeschlossen, der auf einer Seite mit der Turbine 5 verbunden ist und auf der gegenüberliegenden Seite an einer Wand des Gehäuses 2, insbesondere an der Hangseite, festgelegt ist. Der Zulauf 7 kann zur Vermeidung von Vibrationen an einer zusätzlichen Stahlplatte an der Gehäusewand festgelegt sein. Dabei kann an der Wand ein Flansch 9 des Zulaufes 7 über schematisch dargestellte Schraubverbindungen fixiert sein, an die Außenseite des Zulaufes 7 kann dann an den Flansch 9 ein Zulaufrohr 8 angeschlossen werden, das eine Verbindung zu einem Wasserspeicher 10 (Obergraben) herstellt, der höher angeordnet ist als die Turbine, beispielsweise zwischen 100 m und 2.000 m höher. Dadurch kann über einen Wasserzulauf 11 an dem Wasserspeicher 10 die Turbine 5 betrieben werden.

Hinter der Turbine 5 ist ein Ablauf 12 vorgesehen, der das von der Turbine 5 kommende Wasser zu einer Ablauföffnung 13 leitet, die an einer Wand des Gehäuses 2 angeordnet ist. Der Ablauf 12 kann ebenfalls über einen Flansch an einer Wand des Gehäuses festgelegt sein, insbesondere an der Talseite, und dort an ein Ablaufrohr angeschlossen werden (Untergraben). Der Ablauf 12 besitzt vorzugsweise einen um mindestens 20% größeren Durchmesser als der Zulauf 7.

In dem Gehäuse 2 befindet sich oberhalb der Turbine 5 ein begehbarer Zwischenboden 15, vorzugsweise ein Gitterrost, den an den Wänden des Gehäuses 2 festgelegt ist. Der Zwischenboden kann beispielsweise über eine Treppe 16 oder Leiter an einer Wand des Gehäuses 2 zugänglich sein. Alternativ oder zusätzlich kann oberhalb des Zwischenbodens 15 eine Tür 18 in einer Wand des Gehäuses vorgesehen werden, über den ein Zugang zu dem Gehäuse 2 geschaffen wird. Oberhalb des Zwischenbodens 15 ist ein Schaltschrank 17 dargestellt, der die Steuerung der Turbine 5 und des Generators 6 übernimmt und in dem die Elektrik untergebracht ist.

Das Gehäuse 2 wird an vier Seiten verschlossen, wobei an mindestens vier, optional an allen acht Ecken vorzugsweise Ösen 19 vorgesehen sind, um das Gehäuse 2 besser handhaben zu können. In die Ösen 19 sind Lasthaken einhängbar. Optional kann das Gehäuse 2 in der aufgestellten Position an seiner Oberseite ein Dach 20 oder eine Haube erhalten, um das Eindringen von Feuchtigkeit durch Niederschlag zu vermeiden. Das vorzugsweise einstückig ausgebildete Dach 20 ist an einer Oberseite des Gehäuses 2 festgelegt.

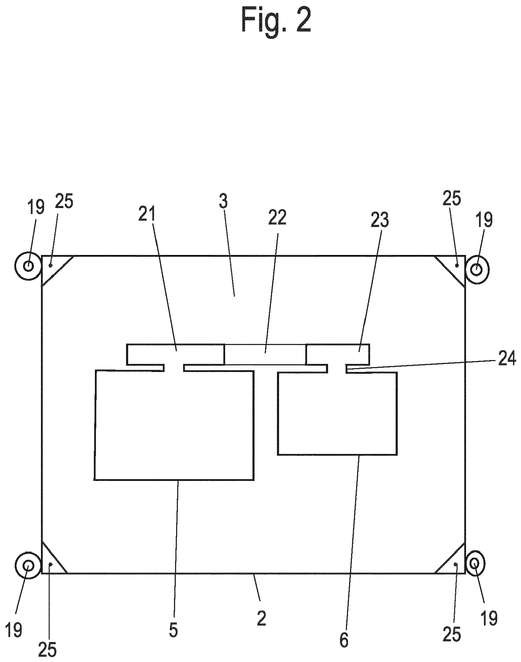

In Figur 2 ist das Gehäuse 2 in einer schematischen Draufsicht dargestellt, in der die Turbine 5 und der Generator 6 gezeigt sind. Die Turbine 5 treibt durch die Drehbewegung der Turbinenschaufel über eine erste Welle ein Schwungrad 21 an, um das ein Riementrieb 22 geführt ist, der die Antriebsenergie auf ein weiteres Rad 23 übergibt, das über eine zweite Welle den Generator 6 antreibt. Die erste und die zweite Welle sind parallel und beabstandet angeordnet. Der Riementrieb 22 kann als Flachriemen oder als Keilriemen ausgebildet sein.

Optional kann zwischen dem Rad 23 und dem Generator 6 ein Übersetzungsgetriebe 24 vorgesehen sein, um die Drehzahl in dem Generator 6 entsprechend der Leistung der Turbine 5 anzupassen.

Der plattenförmige Boden 3 ist an vier Ecken mit dem Betonfundament verschraubt. Hierzu sind vier Gewindebolzen 25 vorgesehen, um den Behälter stabil auf dem Betonfundament festzulegen.

Die dargestellte Turbine 5 ist vorzugsweise als Ossberger-Turbine ausgebildet, es können aber auch andere Turbinentypen für den Kraftwerksaufbau 1 eingesetzt werden.

### Bezugszeichenliste

- 1: Kraftwerksaufbau
- 2: Gehäuse
- 3: Boden
- 4: Gitterrost
- 5: Turbine
- 6: Generator
- 7: Zulauf
- 8: Zulaufrohr
- 9: Flansch
- 10: Wasserspeicher (Obergraben)
- 11: Wasserzulauf
- 12: Ablauf (Untergraben)
- 13: Ablauföffnung
- 14: Verstärkungsstrebe
- 15: Zwischenboden
- 16: Treppe
- 17: Schaltschrank
- 18: Tür
- 19: Öse
- 20: Dach
- 21: Schwungrad
- 22: Riementrieb
- 23: Rad
- 24: Übersetzungsgetriebe
- 25: Gewindebolzen

## Patentansprüche

1. Transportabler Kraftwerksaufbau (1) mit:
- einem im Wesentlichen quaderförmigen transportablen Gehäuse (2) mit einen Innenraum umgebenden Wänden;
- einer in dem Gehäuse (2) angeordneten Turbine (5);
- einem in dem Gehäuse (2) angeordneten durch die Turbine (5) angetriebenen Generator (6);
- mindestens einem an einer Wand festgelegten Zulauf (7) zu der Turbine (5), und
- mindestens einem an einer Wand festgelegten Ablauf (12) hinter der Turbine (5).

2. Kraftwerksaufbau nach Anspruch 1, **dadurch gekennzeichnet, dass** in dem Gehäuse (2) ein Schaltschrank (17) mit einer Steuerung für die Turbine (5) und/oder den Generator (6) installiert ist.

3. Kraftwerksaufbau nach Anspruch 1 oder 2, **dadurch gekennzeichnet, dass** das Gehäuse (2) einen Boden (3) umfasst und die Turbine (5) beabstandet von dem Boden (3) erhöht auf einer Stützkonstruktion (4, 14) angeordnet ist.

4. Kraftwerksaufbau nach Anspruch 3, **dadurch gekennzeichnet, dass** die Stützkonstruktion einen begehbaren Gitterrost (4) umfasst, der um die Turbine (5) angeordnet ist.

5. Kraftwerksaufbau nach einem der vorhergehenden Ansprüche, **dadurch gekennzeichnet, dass** die Turbine (5) den Generator (6) über einen Riementrieb (22) antreibt.

6. Kraftwerksaufbau nach einem der vorhergehenden Ansprüche, **dadurch gekennzeichnet, dass** die Turbine (5) eine horizontal liegende Antriebswelle besitzt, auf der ein Schwungrad angeordnet ist, das über einen Riementrieb ein Rad des mit Permanentmagneten ausgerüsteten Generators antreibt.

7. Kraftwerksaufbau nach einem der vorhergehenden Ansprüche, **dadurch gekennzeichnet, dass** zwischen der Turbine (5) und dem Generator (6) ein Übersetzungsgetriebe (24) vorgesehen ist.

8. Kraftwerksaufbau nach einem der vorhergehenden Ansprüche, **dadurch gekennzeichnet, dass** das Gehäuse (2) an mindestens vier Ecken Ösen (19) zum Einhängen eines Lasthakens aufweist.

9. Kraftwerksaufbau nach einem der vorhergehenden Ansprüche, **dadurch gekennzeichnet, dass** eine Längsrichtung des Gehäuses (2) in der montierten Position vertikal ist und die Höhe des Gehäuses (2) in der montierten Position bevorzugt zwischen 6 bis 10 Metern ist.

10. Kraftwerksaufbau nach einem der vorhergehenden Ansprüche, **dadurch gekennzeichnet, dass** das Gehäuse (2) ein Innenvolumen von mindestens 60 m³, vorzugsweise zwischen 80 m³ und 120 m³, aufweist.

11. Kraftwerksaufbau nach einem der vorhergehenden Ansprüche, **dadurch gekennzeichnet, dass** der Zulauf (7) über einen Flansch (9) an einer Wand des Gehäuses (2) festgelegt, ist an dem außen an dem Gehäuse (2) ein Zulauf (8) anschließbar ist.

12. Kraftwerksaufbau nach einem der vorhergehenden Ansprüche, **dadurch gekennzeichnet, dass** die Wände des Gehäuses (2) aus einem Stahlblech, insbesondere aus einem innen und außen verzinkten Stahlblech, hergestellt sind.

13. Kraftwerksaufbau nach einem der vorhergehenden Ansprüche, **dadurch gekennzeichnet, dass** die Wände des Gehäuses (2) aus einem gewellten Stahlblech hergestellt sind.

14. Kraftwerksaufbau nach einem der vorhergehenden Ansprüche, **dadurch gekennzeichnet, dass** die Turbine (5) als Ossberger-Kaplan-Turbine, Pelton-Turbine oder als Francis-Turbine ausgebildet ist.

15. Kraftwerksaufbau nach einem der vorhergehenden Ansprüche, **dadurch gekennzeichnet, dass** das oberhalb der Turbine (5) mindestens ein begehbarer Zwischenboden (15) in dem Gehäuse (2) festgelegt ist.

16. Kraftwerksaufbau nach Anspruch 15, **dadurch gekennzeichnet, dass** oberhalb des Zwischenbodens (15) eine zu öffnende Tür (18) in einer Wand des Gehäuses (2) vorgesehen ist.

17. Kraftwerksaufbau nach einem der vorhergehenden Ansprüche, **dadurch gekennzeichnet, dass** das Gehäuse (2) bodenseitig mit einer Betonplatte verschraubt ist, insbesondere an den vier Eckbereichen des Bodens.
